# EUROPÄISCHE PATENTSCHRIFT

(11) **EP 3 339 147 B1**
(45) Veröffentlichungstag und Bekanntmachung des Hinweises auf die Patenterteilung: **04.12.2019**
(21) Anmeldenummer: 17186094.3
(22) Anmeldetag: 14.08.2017
(51) Int. Cl.: B62D 55/30

(54) **RAUPENLAUFWERK**
CATERPILLAR TRACK
APPAREIL DE ROULEMENT À CHENILLES

(30) Priorität: 21.12.2016 DE 102016125063
(43) Veröffentlichungstag der Anmeldung: 27.06.2018
(73) Patentinhaber: CLAAS Selbstfahrende Erntemaschinen GmbH, 33428 Harsewinkel (DE)
(72) Erfinder: Lause, Uwe, 45659 Recklinghausen (DE); Dopheide, Gregor, 33775 Versmold (DE); Uesbeck, Tobias, 48599 Gronau-Epe (DE)
(74) Vertreter: CLAAS Gruppe

(56) Entgegenhaltungen:
- EP-A1- 2 013 508
- EP-A1- 2 036 802
- EP-A1- 2 428 435
- WO-A1-2005/097585
- US-A- 2 453 750

## Beschreibung

Die vorliegende Erfindung betrifft ein Raupenlaufwerk gemäß dem Oberbegriff des Anspruches 1.

Aus der EP 2 036 802 A1 ist ein Raupenlaufwerk der eingangs genannten Art für eine landwirtschaftliche Arbeitsmaschine bekannt. Das Raupenlaufwerk umfasst ein Raupenschiff, an welchem ein Antriebsturas, vordere und hintere Leiträder sowie zwischen diesen angeordnete Stützrollen angeordnet sind, die von einer endlos umlaufenden Raupenkette umschlossen sind. Das Raupenschiff ist an einem Fahrzeugrahmen der Arbeits- oder Erntemaschine starr befestigt. Eine Federanordnung ist mit ihrem einen Ende an dem vorderen Leitrad und ihrem anderen Ende an dem Raupenschiff angelenkt. Die Federanordnung umfasst eine äußere Feder und eine koaxial zu der äußeren Feder angeordnete innere Feder, die gemeinsam auf einer Stange geführt sind. Die als Druckfedern ausgebildete innere Feder und äußere Feder stützen sich endseitig an jeweils einem gemeinsamen Flansch an. Die innere Feder dient der Aufrechterhaltung der Spannung der Kette oder des Bandes, während die zweite Feder durch das Überfahren von Fremdkörpern erzeugte Stöße kompensiert beziehungsweise bei einem Bremsvorgang oder einer Rückwärtsfahrt auftretende Kräfte aufnimmt.

Die Druckschrift US 2 453 750 A offenbart ein gattungsgemäßes Raupenlaufwerk mit einer Federanordnung mit einer äußeren und einer koaxial zu dieser angeordneten inneren Feder.

Aufgabe der vorliegenden Erfindung ist es, ein Raupenlaufwerk der eingangs genannten Art weiterzuentwickeln, welches sich durch einen geringen Verschleiß der Raupenkette bzw. eines Raupenbandes aufgrund der durch die Federanordnung aufgebrachten Kettenspannung auszeichnet.

Diese Aufgabe wird erfindungsgemäß durch die Merkmale des Anspruches 1 gelöst. Vorteilhafte Weiterbildungen sind Gegenstand der von diesem abhängigen Unteransprüche.

Gemäß Anspruch 1 wird zur Lösung der Aufgabe ein Raupenlaufwerk, insbesondere für eine landwirtschaftliche Arbeits- oder Erntemaschine, vorgeschlagen, umfassend ein Antriebsturas und einen Tragrahmen, an welchem ein vorderes Laufrad und ein hinteres Laufrad sowie zwischen diesen angeordnete Stützrollen angeordnet sind, die von einer endlos umlaufenden Raupenkette oder einem endlos umlaufenden Raupenband umschlossen sind, wobei an zumindest einem der Laufräder und dem Tragrahmen wenigstens eine Federanordnung zur Aufrechterhaltung der Spannung der Raupenkette oder des Raupenbandes angebracht ist, mit einer äußeren Feder und einer koaxial zu der äußeren Feder angeordneten inneren Feder. Dabei weist das Raupenlaufwerk eine außerhalb des Antriebsturas befindliche Pendelachse auf, um die der Tragrahmen verschwenkbar ist, wobei in Abhängigkeit von einem Pendelwinkel des Raupenlaufwerks nur die innere Feder oder nur die vorgespannte äußere Feder einen Längenausgleich der Raupenkette oder des Raupenbandes bewirken und dass der Wirkungsbereich der inneren Feder und der äußeren Feder einstellbar ist. Denkbar ist auch, eine, insbesondere geringfügige, Überschneidung der Wirkungsbereiche der inneren Feder und der äußeren Feder vorzusehen. Innerhalb der Überschneidung der Wirkungsbereiche können beide Federn gleichzeitig wirken. Mit Wirkungsbereich ist der jeweilige Bereich des Pendelwinkels gemeint, innerhalb dessen der Tragrahmen um die Pendelachse geschwenkt wird, in welchem nur die innere Feder und/oder die vorgespannte äußere Feder einen Längenausgleich bewirkt. Dabei ist vorgesehen, dass der Wirkungsbereich der inneren Feder größer als der Wirkungsbereich der äußeren Feder ist. Dies hat den Vorteil, dass der unsymmetrische Längenausgleich für das Raupenlaufwerk bei hangaufwärts und hangabwärts gerichteter Fahrt innerhalb eines großen Pendelbereichs ausschließlich von der inneren Feder bewirkt wird. Dadurch kann der Verschleiß der Raupenkette oder des Raupenbandes gering gehalten werden. Die äußere Feder deckt einen relativ kleinen Wirkungsbereich ab. Insbesondere wirkt die äußere Feder bei kurzzeitig auftretenden Belastungen wie Stößen oder Fremdkörpern im Laufwerk. Außerdem kommt die äußere Feder bei einer Fahrt hangabwärts zum Tragen. Mit dem so ausgebildeten Raupenlaufwerk lässt sich ein großer Längenausgleich darstellen, welcher mit einer höheren Sicherheit bei sehr großen Pendelwinkeln einhergeht. Überlastungen der Fahrwerksstruktur lassen sich somit vermeiden. Das Raupenlaufwerk ist als so genanntes Delta-Raupenlaufwerk ausgebildet.

Dabei kann der Gesamtfederkraftverlauf der wenigstens einen Federanordnung einen nichtlinearen Verlauf aufweisen. Mit dem Passieren eines Grenzpendelwinkels tritt eine sprunghafte Veränderung des Gesamtfederkraftverlaufs auf. Der Grenzpendelwinkel des Tragrahmens markiert den Pendelwinkel innerhalb des Pendelbereichs um die Pendelachse, an welchem die innere Feder keine weitere Federkraft zum Spannen der Raupenkette oder des Raupenbandes aufbringen kann und stattdessen die äußere Feder zur Aufrechterhaltung der Spannung zum Tragen kommt.

Die wenigstens eine Federanordnung weist Mittel zum Vorspannen der äußeren Feder und Begrenzen des Federwegs der inneren Feder auf. Hierdurch ist eine einfache Einstellbarkeit des Gesamtfederkraftverlaufs möglich.

Hierzu kann das Mittel zum Vorspannen der äußeren Feder einen Befestigungskörper und eine Federaufnahmeeinrichtung umfassen. Der Befestigungskörper dient der Anordnung an dem Tragrahmen des Raupenlaufwerkes und zugleich als ein Anschlag für die äußere Feder. Die Federaufnahmeeinrichtung nimmt die innere Feder auf. Des Weiteren dient die Federaufnahmeeinrichtung als Anschlag für die äußere Feder. Zudem kann die Federaufnahmeeinrichtung ein Ausknicken der äußeren Feder verhindern.

Erfindungsgemäß umfasst das Mittel zum Begrenzen des Federweges der inneren Feder ein relativ zu der Federaufnahmeeinrichtung bewegliches Begrenzungselement, welches abschnittsweise in der inneren Feder geführt ist. Das Begrenzungselement kann gemeinsam mit der Federaufnahmeeinrichtung einen jeweiligen Endanschlag bilden, an dem die innere Feder jeweils endseitig anliegt. Zudem kann das Begrenzungselement der Übertragung der Federkraft auf die Raupenkette oder das Raupenband dienen, um dieses zu spannen. Dabei wird in Abhängigkeit von dem Pendelwinkel zum Spannen der Raupenkette oder des Raupenbandes entweder die Federkraft der inneren Feder oder der äußeren Feder übertragen.

Bevorzugt kann ein Abstand zwischen dem Begrenzungselement und der Federaufnahmeeinrichtung einstellbar sein. Der einstellbare Abstand gibt den zurücklegbaren Federweg der inneren Feder vor, bis das Begrenzungselement an der Federaufnahmeeinrichtung anliegt. Auf diese Weise lässt sich der Pendelbereich einstellen, innerhalb dessen der Längenausgleich ausschließlich durch die innere Feder der Federanordnung gewährleistet wird.

Dabei ist es von Vorteil, die Federanordnung in der Weise auszulegen, dass bei einem Pendelwinkel in einem Bereich um die Nulllage des Raupenlaufwerks, welches den Hauptbetriebsbereich darstellt, nur die innere Feder wirkt. Somit lassen sich Verschleiß und Belastung der des Raupenlaufwerks reduzieren.

Vorteilhaft ist es, wenn die wenigstens eine Federanordnung auf der dem Antriebsturas zugewandten Seite des Tragrahmens angeordnet ist. Die Federanordnung kann sich zumindest abschnittsweise parallel zu dem Tragrahmen erstrecken. Die von dem vorderen Leitrad durch die wenigstens eine Federanordnung übertragenen Kräfte werden somit direkt in den Tragrahmen eingeleitet. Dabei ist es von Vorteil, die wenigstens eine Federanordnung in Hauptfahrtrichtung, das heißt am vorderen Leitrad anzuordnen. Die Federanordnung wäre bei einer Anordnung in Fahrtrichtung hinten ständig Zugkräften ausgesetzt. So ist die wenigstens eine Federanordnung Bremskräften ausgesetzt, die aber seltener und immer nur temporär auftreten. Vorteilhaft wäre eine Anordnung der wenigstens einen Federanordnung in der Winkelhalbierenden zwischen dem von Leertrum und Lasttrum eingeschlossenen Winkel des vorderen Leitrades.

Insbesondere können an dem vorderen Laufrad ein Paar Federanordnungen vorgesehen sein, die sich beidseitig des vorderen Laufrades in im Wesentlichen horizontaler Richtung erstrecken. Die symmetrische Anordnung zweier Federanordnungen an dem vorderen Leitrad ist bei der Einleitung der Kräfte in den tragrahmen vorteilhaft.

Weiterhin können das vordere Laufrad und der Tragrahmen durch ein Drehgelenk miteinander verbunden sein. Somit kann das vordere Leitrad eine Kippbewegung ausführen welche in Abhängigkeit vom Pendelwinkel vom Tragrahmen weg oder zu diesem hin gerichtet ist.

Alternativ kann das vordere Laufrad mittels einer Linearführung mit dem Tragrahmen verbunden sein.

Die vorliegende Erfindung wird nachstehend anhand von in den Zeichnungen dargestellten Ausführungsbeispielen näher erläutert.

Es zeigen:
- Fig. 1: eine Seitenansicht eines Raupenlaufwerks;
- Fig. 2: eine teilweise freigeschnittene Ansicht des Raupenlaufwerks gemäß Fig. 1 von oben;
- Fig. 3: eine Schnittansicht einer Federanordnung;
- Fig. 4: ein Federkraft-Pendelwinkel-Diagramm.

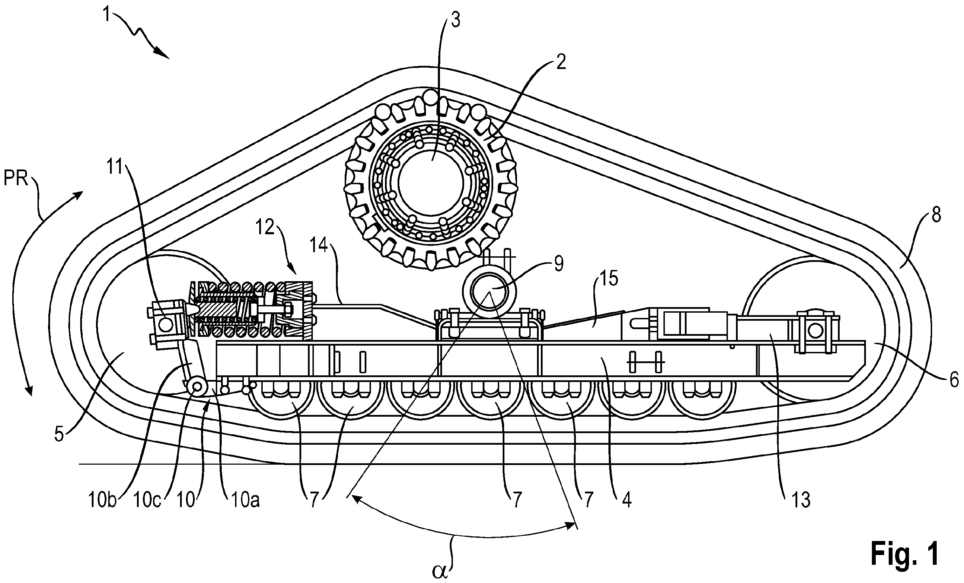

Die Darstellung in Fig. 1. zeigt eine Seitenansicht eines Raupenlaufwerkes 1, welches an einem landwirtschaftlichen Arbeits- oder Erntefahrzeug anbringbar ist. Das Raupenlaufwerk 1 umfasst ein Antriebsturas 2, einen Tragrahmen 4, ein vorderes Leitrad 5, ein hinteres Leitrad 6 sowie zwischen dem vorderen und hinteren Leitrad 5 und 6 positionierte Stützrollen 7. Eine endlos umlaufende Raupenkette 8 umschließt den Antriebsturas 2, das vordere Leitrad 5 und das hintere Leitrad 6. Anstelle der durch Formschluss mit dem Antriebsturas 2 angetriebenen Raupenkette 8 kann auch ein Raupenband vorgesehen sein, welches durch Kraftschluss angetrieben ist.

An dem Tragrahmen 4 sind das vordere Leitrad 5, das hintere Leitrad 6 sowie die Stützräder 7 angeordnet. Der Tragrahmen 4 ist um eine Pendelachse 9 schwenkbar an einem Maschinenrahmen der landwirtschaftlichen Arbeits- oder Erntemaschine angeordnet. Mit a ist ein Pendelwinkel bezeichnet, um welchen der Tragrahmen schwenkbar ist. Mit PR ist die Richtung der Pendelbewegung bezeichnet. Der Antriebsturas 2 ist mittels einer Triebwelle 3 mit der landwirtschaftlichen Arbeits- oder Erntemaschine trieblich verbunden. Das vordere Leitrad 5 ist mittels zweier parallel zueinander angeordneten, als Drehgelenk ausgeführten Hebelanordnungen 10, von denen in der Ansicht gemäß Fig. 1 nur eine sichtbar dargestellt ist, an dem Tragrahmen 4 angelenkt. Ein erster Hebelabschnitt 10a ist mit einem Ende starr an der dem Antriebsturas 2 abgewandten Unterseite des Tragrahmens 4 angeordnet. An seinem freien Ende ist der erste Hebelabschnitt 10 durch eine Schwenkachse 10c mit einem Ende eines zweiten Hebelabschnitts 10b gelenkig verbunden. Der zweite Hebelabschnitt 10b ist mit seinem anderen Ende an dem vorderen Leitrad 5 im Bereich seiner Drehachse 11 angelenkt. Mittels der Hebelanordnung 10 ist das vordere Leitrad 5 um die Schwenkachse 10c schwenkbar. Weiterhin sind an dem Tragrahmen 4 zwei Federanordnungen 12 auf der dem Antriebsturas 2 zugewandten Oberseite des Tragrahmens 4 angeordnet, von denen nur eine in der Fig. 1 sichtbar ist. Die Federanordnungen 12 sind an einem ersten Befestigungsabschnitt 14 an dem Tragrahmen 4 angebracht. Das hintere Leitrad 6 ist mittels eines gabelförmigen Tragarmes 13 an einem zweiten Befestigungsabschnitt 15 an dem Tragrahmen 4 befestigt.

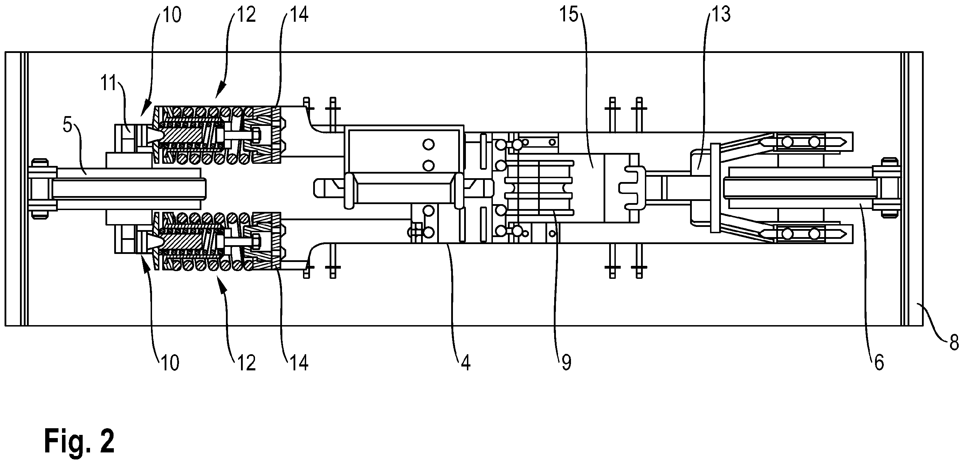

In Fig. 2 ist eine teilweise freigeschnittene Ansicht des Raupenlaufwerks 1 gemäß Fig. 1 von oben dargestellt. Das vordere Leitrad 5 ist, wie bereits weiter oben ausgeführt wurde, mittels der beiden Hebelanordnungen 10 sowie der ebenfalls parallel zueinander angeordneten Federanordnungen 12 an dem Tragrahmen 4 angeordnet. Weiterhin ist aus der Darstellung in Fig. 2 der gabelförmige Tragarm 13 ersichtlich, mit welchem das hintere Leitrad 6 an dem Tragrahmen 4 montiert ist.

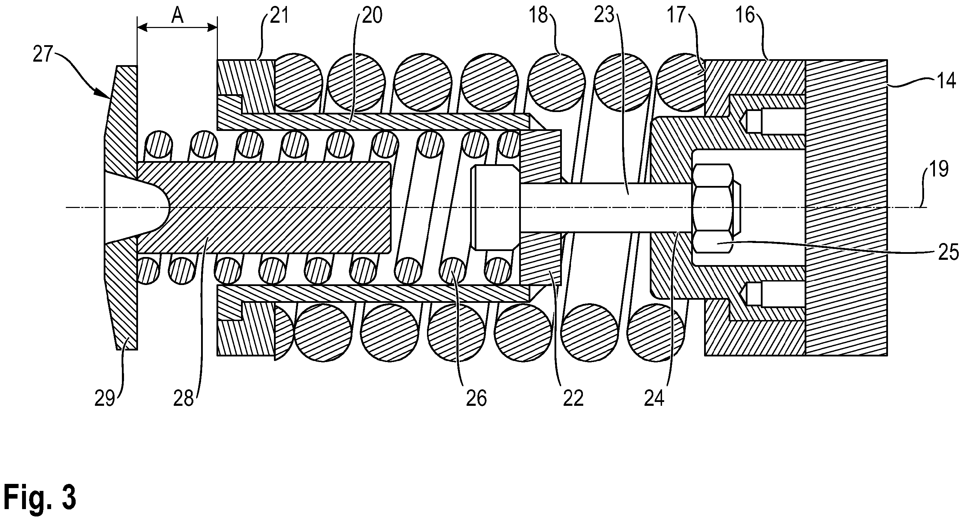

Fig. 3 zeigt eine Schnittansicht der Federanordnung 12. Die Federanordnung 12 ist im Wesentlichen kreiszylindrisch ausgebildet. Die Federanordnung 12 umfasst einen Befestigungskörper 16, mit dem die Federanordnung 12 mit dem ersten Befestigungsabschnitt 14 lösbar verbunden ist. Die äußere Mantelfläche des Befestigungskörpers 16 ist in axialer Richtung abgesetzt ausgebildet, so dass sich eine in radialer Richtung ersteckende Anschlagfläche 17 ausbildet. An dieser Anschlagsfläche 17 stützt sich eine als Druckfeder ausgebildete äußere Feder 18 ab. Die äußere Feder 18 nimmt in ihrem Inneren eine koaxial zur Längsachse 19 der Federanordnung 12 angeordnete Federaufnahmeeinrichtung 20 auf. Die im Wesentlichen hohlzylindrische Federaufnahmeeinrichtung 20 weist an ihrem dem ersten Befestigungsabschnitt 14 abgewandten Ende einen flanschförmigen Abschnitt 21 auf. Die dem Befestigungskörper 16 zugewandte Unterseite des flanschförmigen Abschnitts 21 dient als ein mit der Anschlagfläche 17 korrespondierender Anschlag für die äußere Feder 18. Zugleich wird die Federaufnahmeeinrichtung 20 im Inneren der äußeren Feder 18 in axialer Richtung geführt, wobei die Federaufnahmeeinrichtung 20 dazu beiträgt ein Ausknicken der äußeren Feder 18 zu verhindern.

Die Federaufnahmeeinrichtung 20 weist an ihrer dem Befestigungskörper 16 zugewandten Unterseite einen kreisförmigen Boden 22 auf, an welchen sich ein mit einem Gewindeabschnitt versehener Schaft 23 anschließt. Der Schaft 23 ragt durch eine Durchbohrung 24 in das Innere des Befestigungskörpers 16 hinein. Mittels einer Mutter 25 ist der Schaft 23 der Federaufnahmeeinrichtung 20 am Befestigungskörper 16 gegen ein Hinausdrücken durch die äußere Feder 18 gesichert. Mittels des Schafts 23 und der Mutter 25 lässt sich der Abstand zwischen dem flanschförmigen Abschnitt 21 der Federaufnahmeeinrichtung 20 und der Anschlagfläche 17 des Befestigungskörpers 16 variieren. Damit einhergehend lässt sich eine Vorspannung der äußeren Feder 18 einstellen.

Die Federaufnahmeeinrichtung 20 nimmt in ihrem Inneren eine innere Feder 26 auf, welche koaxial zu der Längsachse 19 der Federanordnung 12 angeordnet ist. Die äußere Feder 18 weist eine größere Federkonstante als die innere Feder 26 auf. Die ebenfalls als Druckfeder ausgeführte Feder 26 stützt sich mit einem Ende am Boden 22 der Federaufnahmeeinrichtung 20 ab und mit ihrem anderen Ende an einem pilzförmigen Begrenzungselement 27. Das Begrenzungselement 27 umfasst einen Führungsabschnitt 28, der sich abschnittsweise in axialer Richtung in das Innere der inneren Feder 26 erstreckt. Der Führungsabschnitt 28 ist endseitig durch einen Abstützabschnitt 29 begrenzt, der einen größeren Außendurchmesser aufweist als der Führungsabschnitt 28. An der der Federaufnahmeeinrichtung 20 zugewandten Unterseite des Abstützabschnitts 29 stützt sich die innere Feder 26 in axialer Richtung ab. Der Außendurchmesser des Abstützabschnitts 29 ist derart gewählt, dass dieser nahezu dem Außendurchmesser der Federaufnahmeeinrichtung 20 entspricht. Der Abstützabschnitt 29 wird durch die Federkraft der inneren Feder 26 gegen die Innenseite der Raupenkette 8 gepresst, um die Spannung der Raupenkette 8 aufrechtzuerhalten. Zwischen dem Abstützabschnitts 29 und dem flanschförmigen Abschnitts 21 stellt sich ein Abstand A ein, der mittels des Schafts 23 und der Mutter 25 einstellbar ist. Der Abstand A bestimmt die Vorspannung der inneren Feder 26.

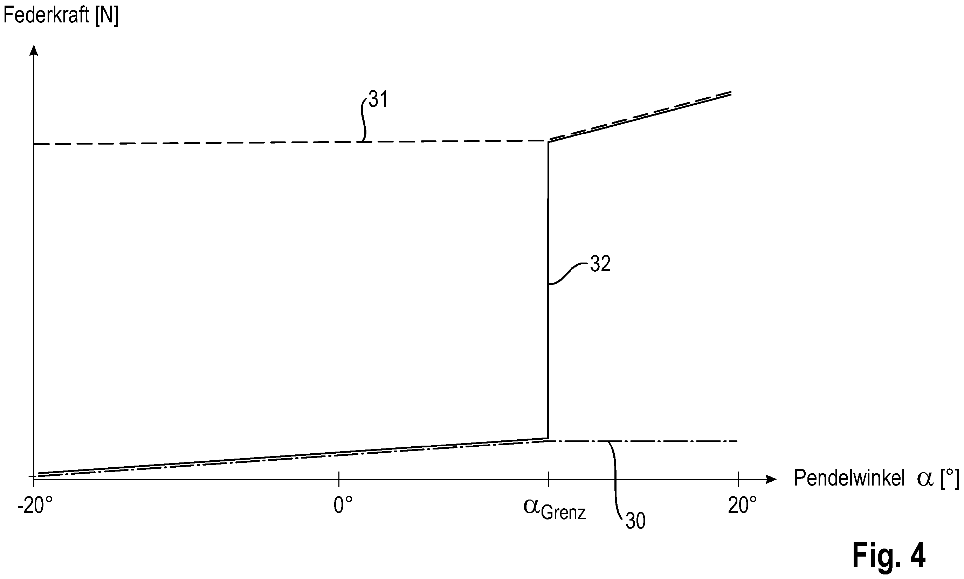

Die Darstellung in Fig. 4 zeigt ein Federkraft-Pendelwinkel-Diagramm der Federanordnung 12. Darin ist über die Abszisse der Pendelwinkel α des Raupenlaufwerks 1 aufgetragen und über die Ordinate die Federkraft der Federanordnung 12. Ein mit Bezugszeichen 30 bezeichneter Verlauf der Federkraft der inneren Feder 26 ist als Strichpunktlinie dargestellt. Ein mit Bezugszeichen 31 bezeichneter Verlauf der Federkraft der äußeren Feder 18 ist als Strichlinie dargestellt. Mit dem Bezugszeichen 32 ist der Verlauf der Gesamtfederkraft der Federanordnung 12 bezeichnet. Dargestellt sind beispielhafte Verläufe der Federkräfte über einen Pendelwinkelbereich von - 20° bis + 20°. Dabei steht das negative Vorzeichen des Pendelwinkels α für eine Pendelbewegung PR des Tragrahmens 4 um die Pendelachse 9, die sich bei einer hangaufwärts gerichteten Fahrt des Raupenlaufwerks 1 einstellt. Das positive Vorzeichen des Pendelwinkels a steht für eine Pendelbewegung PR des Tragrahmens 4 um die Pendelachse 9 bei einer hangabwärts gerichteten Fahrt des Raupenlaufwerks 1.

Nachstehend wird die Funktionsweise des Raupenlaufwerks 1 und der am Tragrahmen 4 angeordneten Federanordnung 12 im Kontext mit dem Federkraft-Pendelwinkel-Diagramm gemäß Fig. 4 erläutert.

Ausgehend von einer neutralen Betriebsposition, in der das Raupenlaufwerk 1 einen Pendelwinkel a von 0° aufweist, bewirkt die innere Feder 26 ein Spannen der Raupenkette 8. Zwischen dem flanschförmigen Abschnitt 21 der Federaufnahmeeinrichtung 20 und dem Abstützabschnitt 29 stellt sich ein Abstand A ein. Wie aus dem Diagramm gemäß Fig. 4 ersichtlich ist, bringt die innere Feder 26 eine Federkraft auf, während die vorgespannte äußere Feder 18 zur Aufrechterhaltung der Raupenkettenspannung nicht beiträgt.

Der Abstand zwischen der Antriebsturas 2 und der Pendelachse 9 ist in allen Betriebssituationen nahezu konstant. Hingegen ändern sich die Abstände zwischen dem Antriebsturas 2 und dem vorderen Leitrad 5 beziehungsweise dem hinteren Leitrad 6 beim Pendeln um die Pendelachse 9, wenn Hindernisse oder Dämme überfahren werden sowie wenn sich ein Fremdkörper in der Raupenkette 8 befindet, in unterschiedlicher Weise. Durch die Hebelanordnung 10 ist das vordere Leitrad 5 um die Schwenkachse 10c schwenkbar, um Längenveränderungen der Raupenkette 8 zwischen dem Antriebsturas 2 und dem vorderen Leitrad 5 aufgrund der Pendelbewegungen PR des Tragrahmens 4 um die Pendelachse 9 ausgleichen zu können.

Bei einer Fahrt hangaufwärts stellt sich, in Abhängigkeit von der zu bewältigenden Neigung, ein negativer Pendelwinkel α ein. Bei der Fahrt hangaufwärts führt dies zu einer Verringerung des Abstands zwischen der Drehachse 11 des vorderen Leitrades 5 und der den Antriebsturas 2 treibenden Triebwelle 3. Damit geht eine Reduzierung der benötigten Länge der Raupenkette 8 zwischen dem vorderen Leitrad 5 und der Antriebsturas 2 einher, wodurch die innere Feder 26 der Federanordnung 12 entlastet wird. Die von der inneren Feder 26 der Federanordnung 12 auf die Raupenkette 8 aufgebrachte Vorspannung sinkt. Dies wird deutlich anhand des Verlaufs 31 der Federkraft der inneren Feder 26, welche mit zunehmend negativ werdendem Pendelwinkel a abnimmt. Die vorgespannte äußere Feder 18 weist hingegen einen konstanten Verlauf 31, da sie, ausgehend von ihrer Vorspannung, keine zusätzliche Federkraft auf das vordere Leitrad 5 aufbringt. Der Verlauf der Gesamtfederkraft 32 der Anordnung 12 korrespondiert mit dem sich über den Pendelbereich ändernden Federkraftverlauf 30 der inneren Feder 26.

Mit zunehmend positiv werdendem Pendelwinkel a bei einer Fahrt hangabwärts steigt die von der inneren Feder 26 aufgebrachte Federkraft an, da sich der Abstand zwischen der Drehachse 11 des vorderen Leitrades 5 und der den Antriebsturas 2 treibenden Triebwelle 3 vergrößert. Mit der Abstandsänderung zwischen dem Leitrad 5 und der Antriebsturas 2 vergrößert sich die benötigte Länge der Raupenketten 8, was zu einem Zusammendrücken der inneren Feder 26 führt, da die Raupenkette 8 nicht gelängt werden kann.

Die Zunahme der Federkraft der inneren Feder 26 erfolgt, bis der Abstand A zwischen dem flanschförmigen Abschnitt 21 der Federaufnahmeeinrichtung 20 und dem Abstützabschnitt 29 null beträgt. Das heißt der flanschförmige Abschnitt 21 liegt an dem Abstützabschnitt 29 an, wobei die innere Feder 26 auf Block zusammengedrückt sein kann. Ist der Abstand A gleich null, kommt es zu einer sprunghaften Veränderung des Gesamtfederkraftverlaufs 32, wie aus Fig. 4 ersichtlich. Der Pendelwinkel α des Tragrahmens 4, bei welchem der Abstand A zu null wird, entspricht einem Grenzpendelwinkel α_{Grenz} Bei einem Passieren des Grenzpendelwinkels αGrenz tritt eine sprunghafte Veränderung des Gesamtfederkraftverlaufs auf. Eine weitere Zunahme des Pendelwinkels α führt dann dazu, dass nur noch die äußere Feder 18 eine Federkraft auf die Raupenkette aufbringt, was aus dem Federkraftverlauf 31 ersichtlich ist. Der Gesamtfederkraftverlauf 32 der Federanordnung 12 ändert sich sprunghaft auf den Federkraftverlauf 31 der äußeren Feder 18. Entsprechendes gilt, wenn der Pendelwinkel a bei einem Übergang von der Fahrt hangabwärts in eine neutrale oder Fahrt hangaufwärts kleiner wird. Das Passieren des Grenzwinkels α_{Grenz} bei abnehmendem Pendelwinkel α führt dazu, dass ausschließlich die innere Feder 26 die Spannung in der Raupenkette 8 aufrecht erhält, während die äußere Feder 18 nur bei temporären Einflüsse wirksam ist.

Der Abstand A lässt sich zum einen durch die Federkonstante der verbauten inneren Freder 26 beeinflussen und zum anderen durch die Abstandsveränderung zwischen dem Boden 22 der Federaufnahmeeinrichtung 20 und dem Befestigungskörper 16. Dieser Abstand A lässt sich, wie weiter oben bereits ausgeführt wurde, jederzeit mittels des Schafts 23 und der Mutter 25 variieren.

**Bezugszeichenliste**

| | | | |
|---|---|---|---|
| 1 | Raupenlaufwerk | 29 | Abstützabschnitt |
| 2 | Antriebsturas | 30 | Federkraftverlauf von 18 |
| 3 | Triebwelle | 31 | Federkraftverlauf von 26 |
| 4 | Tragrahmen | 32 | Gesamtfederkraftverlauf |
| 5 | Vorderes Leitrad | | |
| 6 | Hinteres Leitrad | α | Pendelwinkel |
| 7 | Stützrad | α_{Grenz} | Grenzpendelwinkel |
| 8 | Raupenkette | PR | Pendelbewegung |
| 9 | Pendelachse | | |
| 10 | Hebelanordnung | | |
| 10a | Erster Hebelabschnitt | | |
| 10b | Zweiter Hebelabschnitt | | |
| 10c | Schwenkachse | | |
| 11 | Drehachse | | |
| 12 | Federanordnung | | |
| 13 | Tragarm | | |
| 14 | Erster Befestigungsabschnitt | | |
| 15 | Zweiter Befestigungsabschnitt | | |
| 16 | Befestigungskörper | | |
| 17 | Anschlagsfläche | | |
| 18 | Äußere Feder | | |
| 19 | Längsachse von 12 | | |
| 20 | Federaufnahmeeinrichtung | | |
| 21 | flanschförmiger Abschnitt | | |
| 22 | Boden | | |
| 23 | Schaft | | |
| 24 | Durchbohrung | | |
| 25 | Mutter | | |
| 26 | Innere Feder | | |
| 27 | Begrenzungselement | | |
| 28 | Führungsabschnitt | | |

## Patentansprüche

1. Raupenlaufwerk (1), umfassend ein Antriebsturas (2) und einen Tragrahmen (4), an welchem ein vorderes Laufrad (5) und ein hinteres Laufrad (6) sowie zwischen diesen angeordnete Stützrollen (7) angeordnet sind, die von einer endlos umlaufenden Raupenkette (8) oder einem endlos umlaufenden Raupenband umschlossen sind, wobei an zumindest einem der Laufräder (5) und dem Tragrahmen (4) wenigstens eine Federanordnung (12) zur Aufrechterhaltung der Spannung der Raupenkette (8) oder des Raupenbandes angebracht ist, umfassend eine äußere Feder (18) und eine koaxial zu der äußeren Feder (18) angeordnete innere Feder (26), wobei das Raupenlaufwerk (1) eine außerhalb des Antriebsturas (2) befindliche Pendelachse (9) aufweist, um die der Tragrahmen (4) verschwenkbar ist, wobei in Abhängigkeit von einem Pendelwinkel (a) des Tragrahmens (4) nur die innere Feder (26) oder nur die äußere Feder (18) einen Längenausgleich der Raupenkette (8) oder des Raupenbandes bewirken und dass der Wirkungsbereich der inneren Feder (26) und der äußeren Feder (18) einstellbar ist,
**dadurch gekennzeichnet, dass**
die wenigstens eine Federanordnung (12) Mittel zum Vorspannen der äußeren Feder (18) und Begrenzen des Federwegs der inneren Feder (26) aufweist, und das Mittel zum Begrenzen des Federweges der inneren Feder (26) ein Begrenzungselement (27) umfasst, welches abschnittsweise in der inneren Feder (26) geführt ist.

2. Raupenlaufwerk (1) nach Anspruch 1, **dadurch gekennzeichnet, dass** der Gesamtfederkraftverlauf der wenigstens einen Federanordnung (12) einen nichtlinearen Verlauf aufweist.

3. Raupenlaufwerk (1) nach einem der vorherigen Ansprüche, **dadurch gekennzeichnet, dass** das Mittel zum Vorspannen der äußeren Feder (18) einen Befestigungskörper (16) und eine Federaufnahmeeinrichtung (20) umfasst.

4. Raupenlaufwerk (1) nach einem der vorherigen Ansprüche, **dadurch gekennzeichnet, dass** ein Abstand (A) zwischen dem Begrenzungselement (27) und der Federaufnahmeeinrichtung (20) einstellbar ist.

5. Raupenlaufwerk (1) nach einem der vorherigen Ansprüche, **dadurch gekennzeichnet, dass** die wenigstens eine Federanordnung (12) auf der dem Antriebsturas (2) zugewandten Seite des Tragrahmens (4) angeordnet ist.

6. Raupenlaufwerk (1) nach einem der vorherigen Ansprüche, **dadurch gekennzeichnet, dass** an dem vorderen Laufrad (5) ein Paar Federanordnungen (12) vorgesehen sind, die sich beidseitig des vorderen Laufrades (5) in im Wesentlichen horizontaler Richtung erstrecken.

7. Raupenlaufwerk (1) nach einem der vorherigen Ansprüche, **dadurch gekennzeichnet, dass** das vordere Laufrad (5) und der Tragrahmen (5) durch ein Drehgelenk (10) miteinander verbunden sind.

8. Raupenlaufwerk (1) nach einem der vorherigen Ansprüche, **dadurch gekennzeichnet, dass** das vordere Laufrad (5) mittels einer Linearführung mit dem Tragrahmen (4) verbunden ist.

## Claims

1. A crawler drive assembly (1) including a drive sprocket (2) and a support frame (4), on which there are arranged a front drive wheel (5) and a rear drive wheel (6) and arranged between them support rollers (7), which are enclosed by an endlessly circulating crawler track (8) or an endlessly circulating crawler belt, wherein mounted at at least one of the drive wheels (5) and the support frame (4) is at least one spring arrangement (12) for maintaining the tension of the crawler track (8) or the crawler belt, including an outer spring (18) and an inner spring (26) arranged coaxially with the outer spring (18), wherein the crawler drive assembly (1) has a pendulum axis (9) disposed outside the drive sprocket (2) and about which the support frame (4) is pivotable, wherein in dependence on a pendulum angle (α) of the support frame (4) only the inner spring (26) or only the outer spring (18) provide for length compensation of the crawler track (8) or the crawler belt and the range of action of the inner spring (26) and the outer spring (18) is adjustable,
**characterised in that**
the at least one spring arrangement (12) has means for biasing the outer spring (18) and limiting the spring travel of the inner spring (26) and the means for limiting the spring travel of the inner spring (26) includes a limiting element (7) which is guided portion-wise in the inner spring (26).

2. A crawler drive assembly (1) according to claim 1 **characterised in that** the overall spring force configuration of the at least one spring arrangement (12) has a non-linear configuration.

3. A crawler drive assembly (1) according to one of the preceding claims **characterised in that** the means for biasing the outer spring (18) includes a fixing body (16) and a spring receiving device (20).

4. A crawler drive assembly (1) according to one of the preceding claims **characterised in that** a spacing (A) between the limiting element (27) and the spring receiving device (20) is adjustable.

5. A crawler drive assembly (1) according to one of the preceding claims **characterised in that** the at least one spring arrangement (12) is arranged on the side of the support frame (4) that is towards the drive sprocket (2).

6. A crawler drive assembly (1) according to one of the preceding claims **characterised in that** provided at the front drive wheel (5) is a pair of spring arrangements (12) which extend on both sides of the front drive wheel (5) in the substantially horizontal direction.

7. A crawler drive assembly (1) according to one of the preceding claims **characterised in that** the front drive wheel (5) and the support frame (4) are connected together by a rotary joint (10).

8. A crawler drive assembly (1) according to one of the preceding claims **characterised in that** the front drive wheel (5) is connected to the support frame (4) by means of a linear guide.

## Revendications

1. Train de roulement à chenilles (1) comprenant un barbotin d'entraînement (2) et un châssis porteur (4) sur lequel sont disposés une roue porteuse avant (5) et une roue porteuse arrière (6) ainsi que des galets de support (7) qui sont disposés entre celles-ci et qui sont entourés d'une chaîne de chenille à défilement continu (8) ou d'une bande de chenille à défilement continu, sur au moins une des roues porteuses (5) et sur le châssis porteur (4) étant disposé au moins un agencement de ressort (12) pour maintenir la tension de la chaîne de chenille (8) ou de la bande de chenille, comprenant un ressort extérieur (18) et un ressort intérieur (26) disposé coaxialement au ressort extérieur (18), le train de roulement à chenilles (1) comportant un essieu oscillant (9) qui se trouve à l'extérieur du barbotin d'entraînement (2) et autour duquel le châssis porteur (4) est pivotant, en fonction d'un angle d'oscillation (α) du châssis porteur (4) seul le ressort intérieur (26) ou seul le ressort extérieur (18) effectuant une compensation de longueur de la chaîne de chenille (8) ou de la bande de chenille, et la plage d'action du ressort intérieur (26) et du ressort extérieur (18) étant réglable, **caractérisé en ce que** le au moins un agencement de ressort (12) comporte des moyens pour précontraindre le ressort extérieur (18) et pour limiter la course élastique du ressort intérieur (26), et le moyen pour limiter la course élastique du ressort intérieur (26) comprend un élément de limitation (27) qui est guidé par endroits dans le ressort intérieur (26).

2. Train de roulement à chenilles (1) selon la revendication 1, **caractérisé en ce que** la courbe de force élastique totale du au moins un agencement de ressort (12) présente une allure non linéaire.

3. Train de roulement à chenilles (1) selon une des revendications précédentes, **caractérisé en ce que** le moyen de précontrainte du ressort extérieur (18) comprend un corps de renfort (16) et un équipement de logement de ressort (20).

4. Train de roulement à chenilles (1) selon une des revendications précédentes, **caractérisé en ce qu'**une distance (A) entre l'élément de limitation (27) et l'équipement de logement de ressort (20) est réglable.

5. Train de roulement à chenilles (1) selon une des revendications précédentes, **caractérisé en ce que** le au moins un agencement de ressort (12) est disposé sur le côté du châssis porteur (4) tourné vers le barbotin d'entraînement (2).

6. Train de roulement à chenilles (1) selon une des revendications précédentes, **caractérisé en ce que** sur la roue porteuse avant (5) est prévue une paire d'agencements de ressort (12) qui s'étendent de part et d'autre de la roue porteuse avant (5) dans la direction sensiblement horizontale.

7. Train de roulement à chenilles (1) selon une des revendications précédentes, **caractérisé en ce que** la roue porteuse avant (5) et le châssis porteur (4) sont reliés entre eux par l'intermédiaire d'une articulation pivotante (10).

8. Train de roulement à chenilles (1) selon une des revendications précédentes, **caractérisé en ce que** la roue porteuse avant (5) est reliée au châssis porteur (4) au moyen d'un guide linéaire.
